# EUROPEAN PATENT SPECIFICATION

(11) **EP 4 532 886 B1**
(45) Date of publication and mention of the grant of the patent: **29.10.2025**
(21) Application number: 22736015.3
(22) Date of filing: 25.05.2022
(51) Int. Cl.: F16L 57/00, E21B 17/00, B65D 59/06, F16L 55/115

(54) **WELLBORE PIPE PROTECTION DEVICE**
BOHRLOCHROHRSCHUTZVORRICHTUNG
DISPOSITIF DE PROTECTION DE CONDUITE DE PUITS DE FORAGE

(43) Date of publication of application: 09.04.2025
(73) Proprietor: Pipe-proteq Holding B.V., 7761 RD Schoonebeek (NL)
(72) Inventor: LÜBBERS, Gerardus Bernardus, 7761 PP Schoonebeek (NL); LÜBBERS, Johannes Lubbertus, 7891 PC Klazienaveen (NL)
(74) Representative: V.O.
(86) International application number: PCT/NL2022/050290
(87) International publication number: WO 2023/229452

(56) References cited:
- WO-A1-2010/143963
- US-A- 3 951 441
- US-A- 5 228 587
- US-A1- 2018 135 792

## Description

The invention relates to a wellbore pipe protection device for protecting a wellbore pipe end, wherein the protection device comprises a circumferential protection wall around a central axis of the protection device, said circumferential protection wall having two mutually opposite inner and outer circumferential protection wall surfaces around said central axis, respectively, and wherein the protection device has mutually opposite mounting and de-mounting directions along said central axis, and wherein a protection device inner radius is defined as the smallest radius of the inner circumferential protection wall surface as measured in radial direction relative to the central axis, so that said protection device inner radius limits a maximum outer radius of a wellbore pipe end to which the protection device is mountable,
and wherein the protection device is manually operable to interchange its condition between:
   - a mounted condition in which the circumferential protection wall of the protection device has been coaxially slid over the wellbore pipe end in said mounting direction in such manner that the circumferential protection wall with its inner circumferential protection wall surface is facing the wellbore pipe end, and
   - a de-mounted condition in which the circumferential protection wall of the protection device has been coaxially slid-off from the wellbore pipe end in said de-mounting direction,
and wherein the protection device in said mounted condition is manually operable to interchange its condition between:
   - a locked mounted condition in which the protection device has been fixed to the wellbore pipe end in a manner so as to prevent the protection device from becoming detached from the wellbore pipe end due to certain accidental external impacts, and
   - an unlocked mounted condition, in which the protection device has been fixed to the wellbore pipe end less firmly than in the locked mounted condition, and in which the protection device is manually removable from the wellbore pipe end by coaxially sliding the protection device off from the wellbore pipe end in said de-mounting direction in order to bring the protection device in the de-mounted condition.

It is remarked that the term "wellbore pipe" as referred to in the present text is meant to comprise various types of pipes used in wellbore operations, both during drilling phases and during production phases. Hence, the term "wellbore pipe" comprises various types of drill, casing and tubing pipes used in wellbores.

Such a protection device serves to protect, for example, screw threads of wellbore pipe ends against potential damage during transportation and storage of wellbore pipes. When wellbore pipes are in operation, i.e. when they are interconnected to form a pipe string, the protection devices have been removed from the pipe ends.

WO 2011/078658 A1 discloses a wellbore pipe protection device of the type as initially indicated above. See the embodiment shown in Figs. 1-3 of WO 2011/078658 A1. Said embodiment of Figs. 1-3 of WO 2011/078658 A1 provides a solution for the problem to improve the ease and speed of manually installing and de-installing a wellbore pipe protection device, while the protection device in its mounted condition is reliably fixed to a wellbore pipe.

The prior art further includes US 2018/135792 A1, which discloses a universal thread protector for protecting either of the pin and box ends of a pipe. The thread protector has a cap with an open end and a closed end. A seal element is positioned within and adjacent to the open end of the cap. A ring member is positioned against the seal element between the seal element and the closed end of the cap. Bolts are provided having an end positioned against the ring member. The bolts are movable from an unactuated position to an actuated position wherein the bolt applies a force against the ring member when in the actuated position. As such, the ring member pushes against the seal element so as to deform or compress the seal element against the outer diameter of the pipe positioned within the cap. A method of protecting the threaded ends of pipe is also disclosed.

The prior art further includes US 5 228 587 A, which discloses a cap for quickly sealing a distribution pipe of a vacuum chamber having a flange. The cap includes a cup shaped body that fits over the flange and contains a sealing disc with O-ring that presses against the flange surface. The cap is locked to the flange by steel balls that partially pass through holes in the body and wedge under the inserted flange, the balls being held or released by an outer sleeve with two interior ball races of a large and a smaller diameter so that drawing up the sleeve will permit the balls to enter the large diameter race and fall back to release a flange in the body.

It is an object of the invention to provide at least an alternative solution for said problem, and wherein said alternative solution additionally provides for automatical locking of a manually mounted wellbore pipe protection device, and wherein said alternative solution furthermore allows for a simpler design of a wellbore pipe protection device, so that the protection device can be produced cheaper.

For that purpose, the invention provides a wellbore pipe protection device according to the appended independent claim 1.

Hence, the invention provides a wellbore pipe protection device of the type as initially indicated above, wherein the wellbore pipe protection device furthermore is characterized in that said interchangeability between the mounted condition and the de-mounted condition and said interchangeability between the locked mounted condition and the unlocked mounted condition are realized in that:
the inner circumferential protection wall surface is forming a circumferential inner recess of the circumferential protection wall, said circumferential inner recess extending around said central axis and having a radial recess depth, which is defined as being measured in radial direction relative to the central axis and starting from a radial position that corresponds to said protection device inner radius,
said circumferential inner recess comprises a shallowing circumferential recess portion in an axial shallowing range along the central axis, wherein in the shallowing circumferential recess portion the radial recess depth is decreasing as seen in the mounting direction,
the protection device further comprises a solid elastic ring and a hollow elastic ring, each of which is extending around said central axis, and each of which is received in the circumferential inner recess, wherein the solid elastic ring is located further in the mounting direction than the hollow elastic ring, and wherein in the locked mounted condition at least part of the solid elastic ring is extending in said axial shallowing range,
said solid elastic ring has a solid elastic ring inner radius which is defined as being measured in said radial direction,
the protection device further comprises an annular release tool, which is extending around said central axis and which is assembled to the circumferential protection wall in a manually operable reciprocally slidable manner relative to the circumferential protection wall in said mounting and de-mounting directions along said central axis for realizing said interchangeability between the locked mounted condition and the unlocked mounted condition in that the release tool is reciprocally slidable from an activated release tool condition into an inactivated release tool condition, and vice versa, wherein:
   - in said activated release tool condition the release tool has been slided, relative to the circumferential protection wall, in the de-mounting direction in such manner that:
      - the annular release tool is pushing the solid elastic ring in the de-mounting direction against the hollow elastic ring,
      - so that, by said pushing, the hollow elastic ring has been deformed and has given way to the solid elastic ring to move, within the shallowing circumferential recess portion, into the de-mounting direction which is a direction of increasing radial recess depth, and
      - so that, by said pushing, the solid elastic ring has been deformed, whereby said solid elastic ring inner radius has become larger than, or equal to, the protection device inner radius, and
   - in said inactivated release tool condition the release tool has been slided, relative to the circumferential protection wall, in the mounting direction in such manner that:
      - the annular release tool is not anymore pushing the solid elastic ring in the de-mounting direction against the hollow elastic ring,
      - so that in a combined condition of the de-mounted condition and the inactivated release tool condition at least part of the solid elastic ring is extending in said axial shallowing range, and
      - so that in said combined condition said solid elastic ring inner radius is smaller than the protection device inner radius.

Briefly summarized the invention has the following combined key features:
- the circumferential inner recess having the shallowing circumferential recess portion, which has a decreasing radial recess depth in the mounting direction,
- the specific arrangement of the solid elastic ring and the hollow elastic ring in the circumferential inner recess, especially relative to the shallowing circumferential recess portion thereof, and
- the manually operable reciprocally slidable annular release tool.

The favourable effects of these combined key features are briefly described as follows. Starting-off from the de-mounted condition of the protection device while the annular release tool is inactivated, a user can simply slide the protection device over a wellbore pipe end having an outer diameter for which the protection device has been designed. After this sliding action, the protection device automatically goes into its locked mounted condition. That is, should the user try to slide the protection device off from the wellbore pipe end, there is no way that the user can accomplish this by human force. Instead, sliding the protection device off from the wellbore pipe end requires the user to first activate the release tool. When the user slides the release tool into its activated release tool condition, the protection device goes into its unlocked mounted condition, after which the user can easily slide the protection device off from the pipe end.

In the following, the invention is further elucidated with reference to a non-limiting embodiment and with reference to the schematic figures in the appended drawing, in which the following is shown.

Fig. 1 shows, in longitudinal section, a wellbore pipe end and an example of an embodiment of a wellbore pipe protection device according to the invention, wherein the protection device is in its DE-MOUNTED CONDITION relative to the pipe end, and wherein the annular release tool of the protection device is in its INACTIVATED RELEASE TOOL CONDITION.

Fig. 2 shows the situation of Fig. 1 again, however, wherein this time a user has slid the protection device over a wellbore pipe end, while the release tool still is in its INACTIVATED RELEASE TOOL CONDITION, so that the protection device is in its LOCKED MOUNTED CONDITION.

Fig. 3 shows the situation of Fig. 2 again, however, wherein this time a user has unsuccessfully tried to slide the protection device off from the wellbore pipe end.

Fig. 4 shows the situation of Fig. 2 again, however, wherein this time a user has slid the release tool in its ACTIVATED RELEASE TOOL CONDITION, so that the protection device has gone into its UNLOCKED MOUNTED CONDITION.

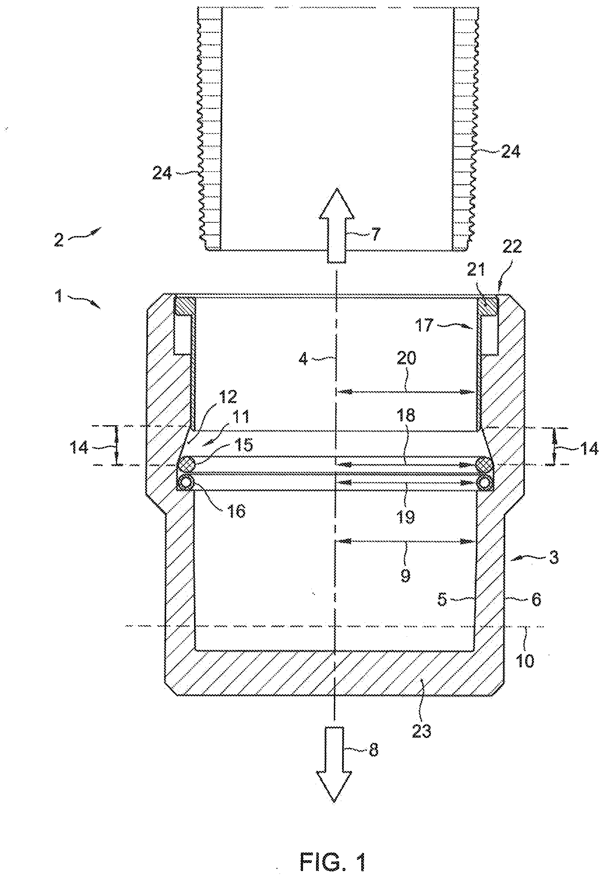

The reference signs used in Figs. 1-4 are referring to the above-mentioned parts and aspects of the invention, as well as to related parts and aspects, in the following manner.
- 1: wellbore pipe protection device
- 2: wellbore pipe end
- 3: circumferential protection wall
- 4: central axis
- 5: inner circumferential protection wall surface
- 6: outer circumferential protection wall surface
- 7: mounting direction
- 8: de-mounting direction
- 9: protection device inner radius
- 10: radial direction
- 11: circumferential inner recess
- 12: shallowing circumferential recess portion
- 14: axial shallowing range
- 15: solid elastic ring
- 16: hollow elastic ring
- 17: annular release tool
- 18: solid elastic ring inner radius
- 19: hollow elastic ring inner radius
- 20: annular release tool ring inner radius
- 21: manual operating element of the annular release tool
- 22: annular retaining flange for the annular release tool
- 23: end wall of the wellbore pipe protection device
- 24: outside screw thread of the wellbore pipe end

Based on the above introductory description, including the brief description of the drawing figures, and based on the above-listed reference signs used in Figs. 1-4, the example of Figs. 1-4 largely is readily self-explanatory. The following extra explanations are given.

Reference is first made to Fig. 1, which shows the wellbore pipe protection device 1 in its de-mounted condition relative to the wellbore pipe end 2, which has the shown outside screw thread 24.

In Fig. 1 it is seen that the annular release tool 17 of the protection device 1 is in its inactivated release tool condition. This inactivated release tool condition has been realized in that the annular release tool 17 has been maximally slided into the mounting direction 7 until it touches with its manual operating element 21 the annular retaining flange 22 of the circumferential protection wall 3.

In Fig. 1 it is further seen that the solid elastic ring 15 and the hollow elastic ring 16 are received in the circumferential inner recess 11, wherein the solid elastic ring 15 is located further in the mounting direction 7 than the hollow elastic ring 16. It is noted that, in the shown example, the solid elastic ring 15 and the hollow elastic ring 16 are made of the same elastic material as compared to one another, and that these two rings 15 and 16, when they would be considered to be lying on a flat surface in their fully relaxed states, would have exactly the same external dimensions relative to one another, i.e. they would have the same inside and outside ring diameters relative to one another then. The only difference between these two rings 15 and 16 is that the solid elastic ring 15 is solid and the hollow elastic ring 16 is hollow, so that, under influence of external load, the hollow elastic ring 16 more easily deforms in its circular cross section than the solid elastic ring 16.

In Fig. 1 it is seen that part of the solid elastic ring 15 is extending in the shallowing circumferential recess portion 12, i.e. in the axial shallowing range 14 where the radial recess depth of the circumferential inner recess 11 is decreasing as seen in the mounting direction 7. The hollow elastic ring 16, on the other hand, is not at all located in the shallowing circumferential recess portion 12. Instead, the hollow elastic ring 16 is located in a portion of the circumferential inner recess 11 where the radial recess depth is larger than in the shallowing circumferential recess portion 12. Due to these different locations of the solid elastic ring 15 and the hollow elastic ring 16 in the circumferential inner recess 11, and due to the elasticity of these two rings, the solid elastic ring inner radius 18 is slightly smaller than the protection device inner radius 9, while the hollow elastic ring inner radius 19 of the hollow elastic ring 16 and the annular release tool ring inner radius 20 of the annular release tool 17, on the other hand, are slightly larger than, or equal to, the protection device inner radius 9. Obviously, and as indicated in Fig. 1, it is noted that said hollow elastic ring inner radius 19 and said annular release tool ring inner radius 20 are measured in said radial direction 10.

In Fig. 1 the wellbore pipe end 2 has an outer diameter for which the protection device 1 has been designed. This means that the overall outside diameter of the wellbore pipe end 2 is slightly smaller than the protection device inner radius 9. Starting-off from the situation in Fig. 1, a user can simply slide the protection device 1 over the wellbore pipe end 2 in the mounting direction 7. This is easily accomplished, even though the solid elastic ring inner radius 18 is slightly smaller than the protection device inner radius 9. After all, if during said sliding the solid elastic ring 15 would touch the outside screw thread 24 of the pipe end 2, said outside screw thread 24 would automatically push the solid elastic ring 15 in the de-mounting direction 8 as seen relative to the circumferential inner recess 11, which means that the solid elastic ring 15 will be pushed a bit further towards areas of increasing radial recess depth of the circumferential inner recess 11, which guarantees low sliding friction between the solid elastic ring 15 and the pipe end 2. It is noted that, in case said outside screw thread 24 would be pushing the solid elastic ring 15 in the de-mounting direction 8, the hollow elastic ring 16 will provide some counter pressure to the solid elastic ring 15, whereby the solid elastic ring 15 will at least partly be kept in the shallowing circumferential recess portion 12, which is extending in the axial shallowing range 14 of the protection device 1.

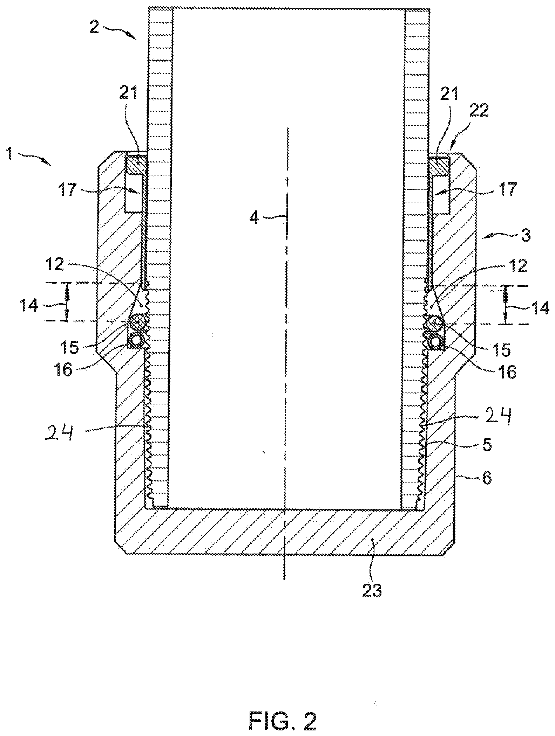

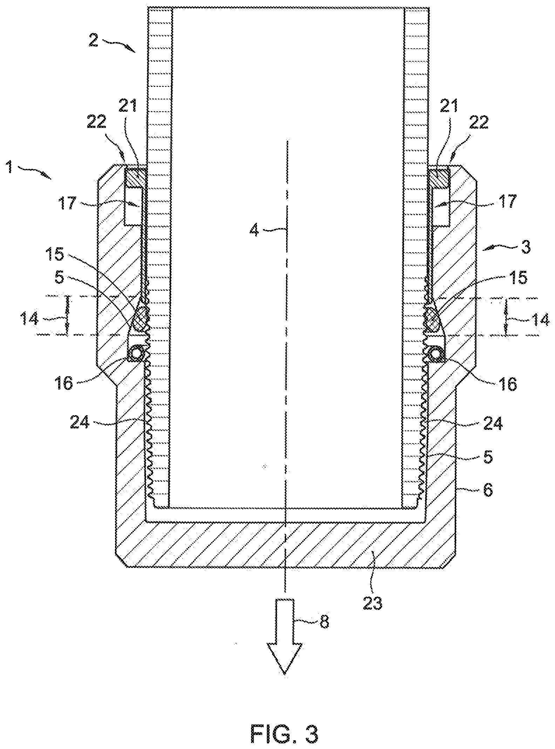

After the user has slid the protection device 1 over the wellbore pipe end 2, the protection device 1 automatically goes into the condition of Fig. 2, which corresponds to the locked mounted condition of the protection device 1. That is, should a user try to slide-off the protection device from the wellbore pipe end, there is no way that a user can accomplish this by human force. This is now illustrated with reference to Fig. 3.

Fig. 3 shows a situation after a user has unsuccessfully tried to slide-off the protection device 1 from the wellbore pipe end 2 into the de-mounting direction 8. By mutually comparing the lower parts of Fig. 2 and Fig. 3 it can be seen in the lower part of Fig. 3 that the user has achieved only a little bit of said sliding-off. The reason for this very limited slidability is that, already at the start of only a little bit of sliding, the solid elastic ring 15 will be forced ever further in the narrowing interspace between the inner circumferential protection wall surface 5 in the axial shallowing range 14 of the protection device 1, on the one hand, and the outside screw thread 24 of the pipe end 2, on the other hand. Fig. 3 clearly shows the highly deformed state of the solid elastic ring 15 in the axial shallowing range 14 of the protection device 1. This results into an ever increasing high clamping force between the protection device 1 and the pipe end 2.

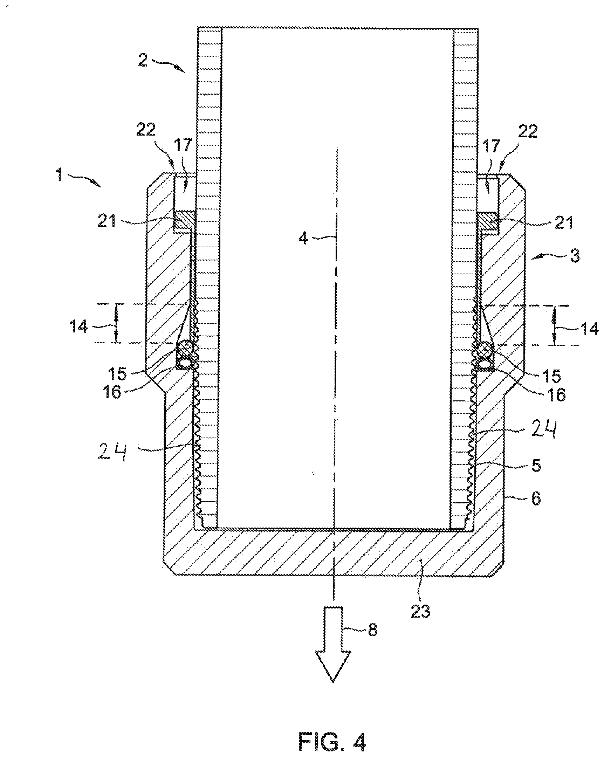

As mentioned, Fig. 4 shows the situation of Fig. 2 again, however, wherein this time a user has slid the annular release tool 17 in its activated release tool condition, so that the protection device 1 has gone into its unlocked mounted condition. That is, in Fig. 4 the user has activated the annular release tool 17 by pushing the manual operating element 21 of the annular release tool 17 in the de-mounting direction 8 relative to the circumferential protection wall 3. In the situation of Fig. 4 the user can easily slide-off the protection device 1 from the pipe end 2 in the de-mounting direction 8.

In the shown example, the solid elastic ring 15 and the hollow elastic ring 16 are each in the form of an O-ring, i.e. an elastic ring which in its fully relaxed state has a circular shape in cross-section, said cross section being perpendicular to the circumferential ring path direction. However, instead of O-rings, a solid elastic ring and/or a hollow elastic ring of a protection device according to the invention may also have many various other cross-sectional shapes perpendicular to the circumferential ring path direction.

Parts of a protection device according to the invention can be made of various materials. For example the circumferential protection wall or the annular release tool of a protection device according to the invention can for instance be manufactured from a metal, or from a plastic, for example by means of injection moulding. It is possible to manufacture both the circumferential protection wall and the annular release tool from the same material. However, it is also possible to manufacture these two parts from mutually different materials, for example the circumferential protection wall from a plastic and the annular release tool from a metal or a metal alloy, or vice versa.

In the shown example, the circumferential protection wall 3 of the protection device 1 has the annular retaining flange 22 for retaining the annular release tool 17. In the figures it is seen that this retaining flange 22 has only very minor radial extent, which serves to ease the assembling of the annular release tool 17 to the circumferential protection wall 3 by pushing the annular release tool 17 through the retaining flange 22, which temporarily gives way then.

In the shown example, the circumferential protection wall 3 is provided with the shown end wall 23. This end wall 23 functions as a stop when mounting the protection device 1 to the wellbore pipe end 2. Furthermore, the end wall 23 provides extra protection of the wellbore pipe end 2.

While the invention has been described and illustrated in detail in the foregoing description and in the drawing figures, such description and illustration are to be considered exemplary and/or illustrative and not restrictive. That is, the invention is not limited to the disclosed embodiments, but is determined by the scope of the appended claims.

## Claims

1. A wellbore pipe protection device (1) for protecting a wellbore pipe end (2), wherein the protection device comprises a circumferential protection wall (3) around a central axis (4) of the protection device, said circumferential protection wall having two mutually opposite inner (5) and outer (6) circumferential protection wall surfaces around said central axis, respectively, and wherein the protection device has mutually opposite mounting (7) and de-mounting (8) directions along said central axis, and wherein a protection device inner radius (9) is defined as the smallest radius of the inner circumferential protection wall surface (5) as measured in radial direction (10) relative to the central axis (4), so that said protection device inner radius (9) limits a maximum outer radius of a wellbore pipe end (2) to which the protection device is mountable,
and wherein the protection device (1) is manually operable to interchange its condition between:
• a mounted condition in which the circumferential protection wall (3) of the protection device (1) has been coaxially slid over the wellbore pipe end (2) in said mounting direction in such manner that the circumferential protection wall with its inner circumferential protection wall surface is facing the wellbore pipe end, and
• a de-mounted condition in which the circumferential protection wall of the protection device has been coaxially slid-off from the wellbore pipe end in said de-mounting direction (8),
and wherein the protection device in said mounted condition is manually operable to interchange its condition between:
• a locked mounted condition in which the protection device has been fixed to the wellbore pipe end in a manner so as to prevent the protection device from becoming detached from the wellbore pipe end due to certain accidental external impacts, and
• an unlocked mounted condition, in which the protection device has been fixed to the wellbore pipe end less firmly than in the locked mounted condition, and in which the protection device is manually removable from the wellbore pipe end by coaxially sliding the protection device off from the wellbore pipe end in said de-mounting direction in order to bring the protection device in the de-mounted condition,
**characterized in that** said interchangeability between the mounted condition and the de-mounted condition and said interchangeability between the locked mounted condition and the unlocked mounted condition are realized **in that**:
the inner circumferential protection wall surface (5) is forming a circumferential inner recess (11) of the circumferential protection wall (3), said circumferential inner recess (11) extending around said central axis (4) and having a radial recess depth, which is defined as being measured in radial direction (10) relative to the central axis (4) and starting from a radial position that corresponds to said protection device inner radius (9),
said circumferential inner recess (11) comprises a shallowing circumferential recess portion (12) in an axial shallowing range (14) along the central axis (4), wherein in the shallowing circumferential recess portion (12) the radial recess depth is decreasing in the mounting direction (7),
the protection device further comprises a solid elastic ring (15) and a hollow elastic ring (16), each of which is extending around said central axis (4), and each of which is received in the circumferential inner recess (11), wherein the solid elastic ring (15) is located further in the mounting direction (7) than the hollow elastic ring (16), and wherein in the locked mounted condition at least part of the solid elastic ring (15) is extending in said axial shallowing range (14),
said solid elastic ring (15) has a solid elastic ring inner radius (18) which is defined as being measured in said radial direction (10),
the protection device (1) further comprises an annular release tool (17), which is extending around said central axis (4) and which is assembled to the circumferential protection wall (3) in a manually operable reciprocally slidable manner relative to the circumferential protection wall (3) in said mounting (7) and de-mounting (8) directions along said central axis (4) for realizing said interchangeability between the locked mounted condition and the unlocked mounted condition **in that** the release tool (17) is reciprocally slidable from an activated release tool condition into an inactivated release tool condition, and vice versa, wherein:
• in said activated release tool condition the release tool (17) has been slided, relative to the circumferential protection wall (3), in the de-mounting direction (8) in such manner that:
- the annular release tool (17) is pushing the solid elastic ring (15) in the de-mounting direction (8) against the hollow elastic ring (16),
- so that, by said pushing, the hollow elastic ring (16) has been deformed and has given way to the solid elastic ring (15) to move, within the shallowing circumferential recess portion (12), into the de-mounting direction (8) which is a direction of increasing radial recess depth, and
- so that, by said pushing, the solid elastic ring (15) has been deformed, whereby said solid elastic ring inner radius (18) is larger than, or equal to, the protection device inner radius (10), and
• in said inactivated release tool condition the release tool (17) has been slided, relative to the circumferential protection wall (3), in the mounting direction (7) in such manner that:
- the annular release tool (17) is not anymore pushing the solid elastic ring (15) in the de-mounting direction (8) against the hollow elastic ring (16),
- so that in a combined condition of the de-mounted condition and the inactivated release tool condition at least part of the solid elastic ring (15) is extending in said axial shallowing range (14), and
- so that in said combined condition said solid elastic ring inner radius (18) is smaller than the protection device inner radius (9).

## Patentansprüche

1. Bohrlochrohrschutzvorrichtung (1) zum Schutz eines Bohrlochrohrendes (2), wobei die Schutzvorrichtung eine Umfangsschutzwand (3) um eine Mittelachse (4) der Schutzvorrichtung herum umfasst, wobei die Umfangsschutzwand zwei einander gegenüberliegende innere (5) und äußere (6) Umfangsschutzwandflächen um die Mittelachse herum aufweist, und wobei die Schutzvorrichtung einander gegenüberliegende Montage- (7) und Demontagerichtungen (8) entlang der Mittelachse aufweist, und wobei ein Innenradius (9) der Schutzvorrichtung als der kleinste Radius der inneren Umfangsschutzwandfläche (5), gemessen in radialer Richtung (10) relativ zur Mittelachse (4), definiert ist, so dass der Innenradius (9) der Schutzvorrichtung einen maximalen Außenradius eines Bohrlochrohrendes (2) begrenzt, an dem die Schutzvorrichtung montierbar ist,
und wobei die Schutzvorrichtung (1) manuell betätigt werden kann, um ihren Zustand zu ändern zwischen:
• einem montierten Zustand, in dem die Umfangsschutzwand (3) der Schutzvorrichtung (1) koaxial über das Bohrlochrohrende (2) in der Montagerichtung in einer Weise geschoben wurde, dass die Umfangsschutzwand mit ihrer inneren Umfangsschutzwandfläche dem Bohrlochrohrende zugewandt ist, und
• einem demontierten Zustand, in dem die Umfangsschutzwand der Schutzvorrichtung koaxial vom Bohrlochrohrende in der Demontagerichtung (8) weggeschoben worden ist, und wobei die Schutzvorrichtung in diesem montierten Zustand manuell betätigt werden kann, um ihren Zustand zu ändern zwischen:
• einem verriegelten montierten Zustand, in dem die Schutzvorrichtung an dem Bohrlochrohrende so befestigt wurde, dass verhindert wird, dass sich die Schutzvorrichtung aufgrund bestimmter zufälliger äußerer Stöße von dem Bohrlochrohrende löst, und
• einem entriegelten montierten Zustand, in dem die Schutzvorrichtung weniger fest als im verriegelten montierten Zustand am Bohrlochrohrende befestigt wurde, und in dem die Schutzvorrichtung manuell vom Bohrlochrohrende entfernt werden kann, indem die Schutzvorrichtung koaxial vom Bohrlochrohrende in der genannten Demontagerichtung weggeschoben wird, um die Schutzvorrichtung in den demontierten Zustand zu bringen,
**dadurch gekennzeichnet, dass** die Austauschbarkeit zwischen dem montierten Zustand und dem demontierten Zustand und die Austauschbarkeit zwischen dem verriegelten montierten Zustand und dem entriegelten montierten Zustand dadurch vollzogen werden, dass:
die innere Umfangsschutzwandfläche (5) eine Umfangsinnenaussparung (11) der Umfangsschutzwand (3) bildet, wobei sich die Umfangsinnenaussparung (11) um die Mittelachse (4) herum erstreckt und eine radiale Aussparungstiefe aufweist, die so definiert ist, dass sie in radialer Richtung (10) relativ zur Mittelachse (4) gemessen wird und von einer radialen Position ausgeht, die dem Innenradius (9) der Schutzvorrichtung entspricht,
die innere Umfangsaussparung (11) einen sich abflachenden Umfangsaussparungsabschnitt (12) in einem axialen Abflachungsbereich (14) entlang der Mittelachse (4) umfasst, wobei in dem sich abflachenden Umfangsaussparungsabschnitt (12) die radiale Aussparungstiefe in Montagerichtung (7) abnimmt,
die Schutzvorrichtung ferner einen massiven elastischen Ring (15) und einen hohlen elastischen Ring (16) umfasst, die sich jeweils um die Mittelachse (4) erstrecken und die jeweils in der inneren Umfangsaussparung (11) aufgenommen werden, wobei der massive elastische Ring (15) in der Montagerichtung (7) weiter entfernt ist als der hohle elastische Ring (16) und wobei sich im verriegelten montierten Zustand zumindest ein Teil des massiven elastischen Rings (15) in den axialen Abflachungsbereich (14) erstreckt,
der massive elastische Ring (15) einen inneren Radius (18) des massiven elastischen Rings aufweist, der als in der radialen Richtung (10) gemessen definiert wird,
die Schutzvorrichtung (1) ferner ein ringförmiges Lösewerkzeug (17) umfasst, das sich um die Mittelachse (4) erstreckt und das an der Umfangsschutzwand (3) in einer manuell betätigbaren, verschiebbaren Weise relativ zu der Umfangsschutzwand (3) in den Montage- (7) und Demontagerichtungen (8) entlang der Mittelachse (4) montiert ist, um die Austauschbarkeit zwischen dem verriegelten montierten Zustand und dem entriegelten montierten Zustand zu vollziehen, indem das Lösewerkzeug (17) wechselseitig wirkend von einem aktivierten Lösewerkzeugzustand in einen inaktivierten Lösewerkzeugzustand und umgekehrt verschiebbar ist, wobei:
• im aktivierten Zustand des Lösewerkzeugs das Lösewerkzeug (17) in Bezug auf die Umfangsschutzwand (3) in der Demontagerichtung (8) so verschoben wurde, dass:
- das ringförmige Lösewerkzeug (17) den massiven elastischen Ring (15) in der Demontagerichtung (8) gegen den hohlen elastischen Ring (16) drückt,
- so dass durch das Drücken der hohle elastische Ring (16) verformt wurde und dem massiven elastischen Ring (15) nachgegeben hat, so dass sich dieser innerhalb des sich abflachenden Umfangsaussparungsabschnitts (12) in die Demontagerichtung (8) bewegt, die eine Richtung zunehmender radialer Aussparungstiefe ist, und
- so dass durch das Drücken der massive elastische Ring (15) verformt wurde, wobei der Innenradius des massiven elastischen Rings (18) größer oder gleich dem Innenradius (9) der Schutzvorrichtung ist, und
• im Zustand des inaktivierten Lösewerkzeugs das Lösewerkzeug (17) in Bezug auf die Umfangsschutzwand (3) in der Montagerichtung (7) so verschoben wurde, dass:
- das ringförmige Lösewerkzeug (17) den massiven elastischen Ring (15) nicht mehr in Demontagerichtung (8) gegen den hohlen elastischen Ring (16) drückt,
- so dass sich in einem kombinierten Zustand des demontierten Zustands und des inaktivierten Zustands des Lösewerkzeugs mindestens ein Teil des massiven elastischen Rings (15) in dem axialen Abflachungsbereich (14) erstreckt, und
- so dass in diesem kombinierten Zustand der Innenradius des massiven elastischen Rings (18) kleiner ist als der Innenradius (9) der Schutzvorrichtung.

## Revendications

1. Dispositif de protection de conduite de puits de forage (1) pour protéger une extrémité de conduite de puits de forage (2), dans lequel le dispositif de protection comprend une paroi de protection circonférentielle (3) autour d'un axe central (4) du dispositif de protection, ladite paroi de protection circonférentielle ayant deux surfaces de paroi de protection circonférentielle interne (5) et externe (6) mutuellement opposées autour dudit axe central respectivement, et dans lequel le dispositif de protection a des directions de montage (7) et de démontage (8) mutuellement opposées le long dudit axe central, et dans lequel un rayon interne de dispositif de protection (9) est défini comme étant le plus petit rayon de la surface de paroi de protection circonférentielle interne (5), tel que mesuré dans la direction radiale (10) par rapport à l'axe central (4), de sorte que ledit rayon interne de dispositif de protection (9) limite un rayon externe maximum d'une extrémité de conduite de puits de forage (2) sur laquelle le dispositif de protection peut être monté,
et dans lequel le dispositif de protection (1) peut être actionné manuellement pour interchanger sa condition entre :
• une condition montée dans laquelle la paroi de protection circonférentielle (3) du dispositif de protection (1) a été coulissée, de manière coaxiale, sur l'extrémité de conduite de puits de forage (2) dans ladite direction de montage de sorte que la paroi de protection circonférentielle avec sa surface de paroi de protection circonférentielle interne fait face à l'extrémité de conduite de puits de forage, et
• une condition démontée dans laquelle la paroi de protection circonférentielle du dispositif de protection a été coulissée, de manière coaxiale, hors de l'extrémité de conduite de puits de forage dans ladite direction de démontage (8),
et dans lequel le dispositif de protection, dans ladite condition montée, peut être actionné manuellement pour interchanger sa condition entre :
• une condition montée verrouillée dans laquelle le dispositif de protection a été fixé sur l'extrémité de conduite de puits de forage afin d'empêcher le dispositif de protection de se détacher de l'extrémité de conduite de puits de forage en raison de certains impacts externes accidentels, et
• une condition montée déverrouillée dans laquelle le dispositif de protection a été fixé sur l'extrémité de conduite de puits de forage moins fermement que dans la condition montée verrouillée, et dans laquelle le dispositif de protection est manuellement amovible de l'extrémité de conduite de puits de forage en faisant coulisser, de manière coaxiale, le dispositif de protection hors de l'extrémité de conduite de puits de forage dans ladite direction de démontage afin d'amener le dispositif de protection dans la condition démontée,
**caractérisé en ce que** ladite interchangeabilité entre la condition montée et la condition démontée et ladite interchangeabilité entre la condition montée verrouillée et la condition montée déverrouillée sont réalisées **en ce que** :
la surface de paroi de protection circonférentielle interne (5) forme un évidement interne circonférentiel (11) de la paroi de protection circonférentielle (3), ledit évidement interne circonférentiel (11) s'étendant autour dudit axe central (4) et ayant une profondeur d'évidement radiale, qui est définie en étant mesurée dans la direction radiale (10) par rapport à l'axe central (4) et en commençant par une position radiale qui correspond audit rayon interne de dispositif de protection (9),
ledit évidement interne circonférentiel (11) comprend une partie d'évidement circonférentielle peu profonde (12) dans une plage axiale peu profonde (14) le long de l'axe central (4), dans lequel dans la partie d'évidement circonférentielle peu profonde (12), la profondeur d'évidement radiale diminue dans la direction de montage (7),
le dispositif de protection comprend en outre une bague élastique pleine (15) et une bague élastique creuse (16), dont chacune s'étend autour dudit axe central (4), et dont chacune est reçue dans l'évidement interne circonférentiel (11), dans lequel la bague élastique pleine (15) est positionnée plus loin dans la direction de montage (7) que la bague élastique creuse (16), et dans lequel dans la condition montée verrouillée, au moins une partie de la bague élastique pleine (15) s'étend dans ladite plage axiale peu profonde (14),
ladite bague élastique pleine (15) a un rayon interne de bague élastique pleine (18) qui est défini en étant mesuré dans ladite direction radiale (10),
le dispositif de protection (1) comprend en outre un outil de libération annulaire (17) qui s'étend autour dudit axe central (4) et qui est assemblé à la paroi de protection circonférentielle (3) d'une manière pouvant être actionnée manuellement et pouvant coulisser de manière réciproque par rapport à la paroi de protection circonférentielle (3) dans lesdites directions de montage (7) et de démontage (8) le long dudit axe central (4) pour réaliser ladite interchangeabilité entre la condition montée verrouillée et la condition montée déverrouillée **en ce que** l'outil de libération (17) peut coulisser de manière réciproque d'une condition d'outil de libération activée dans une condition d'outil de libération non activée, et vice versa, dans lequel :
• dans ladite condition d'outil de libération activée, l'outil de libération (17) a été coulissé, par rapport à la paroi de protection circonférentielle (3), dans la direction de démontage (8) de sorte que :
- l'outil de libération annulaire (17) pousse la bague élastique pleine (15) dans la direction de démontage (8) contre la bague élastique creuse (16),
- de sorte que, par ladite poussée, la bague élastique creuse (16) a été déformée et a laissé place à la bague élastique pleine (15) pour se déplacer dans la partie d'évidement circonférentielle peu profonde (12), dans la direction de démontage (8) qui est une direction pour augmenter la profondeur d'évidement radiale, et
- de sorte que, par ladite poussée, la bague élastique pleine (15) a été déformée, moyennant quoi ledit rayon interne de bague élastique pleine (18) est supérieur ou égal au rayon interne de dispositif de protection (10), et
• dans ladite condition d'outil de libération non activée, l'outil de libération (17) a été coulissé, par rapport à la paroi de protection circonférentielle (3), dans la direction de montage (7) de sorte que :
- l'outil de libération annulaire (17) ne pousse plus la bague élastique pleine (15) dans la direction de démontage (8) contre la bague élastique creuse (16),
- de sorte que dans une condition combinée de la condition démontée et de la condition d'outil de libération non activée, au moins une partie de la bague élastique pleine (15) s'étend dans ladite plage axiale peu profonde (14), et
- de sorte que dans ladite condition combinée, ledit rayon interne de bague élastique pleine (18) est inférieur au rayon interne de dispositif de protection (9).
